# EUROPÄISCHE PATENTSCHRIFT

(11) **EP 2 918 758 B1**
(45) Veröffentlichungstag und Bekanntmachung des Hinweises auf die Patenterteilung: **19.07.2017**
(21) Anmeldenummer: 14158543.0
(22) Anmeldetag: 10.03.2014
(51) Int. Cl.: E05B 81/18, B62D 33/073, E05B 81/10, B62D 33/07, E05B 63/00

(54) **Verriegelungsvorrichtung**
Locking device
Dispositif de verrouillage

(43) Veröffentlichungstag der Anmeldung: 16.09.2015
(73) Patentinhaber: Rheinmetall MAN Military Vehicles Österreich GesmbH, 1230 Wien (AT)
(72) Erfinder: Deimel, Michael, 3454 Adletzberg (AT); Pertlik, Rudolf, 1220 Wien (AT); Milchrahm, Heinz, 2492 Zillingdorf (AT); Lang, Martin, 94110 Wegscheid (DE); Leitner, Martin, 4441 Behamberg (AT)
(74) Vertreter: Horn Kleimann Waitzhofer Patentanwälte PartG mbB

(56) Entgegenhaltungen:
- GB-A- 1 374 698
- GB-A- 2 084 236
- US-A- 3 400 970
- US-A- 3 581 840

## Beschreibung

Die Erfindung betrifft eine Verriegelungsvorrichtung mit einem Schloss und einem mit dem Schloss verbindbaren Schließbolzen. Die Erfindung bezieht sich ferner auf eine Verwendung einer derartigen Verriegelungsvorrichtung zur lösbaren Fixierung eines kippbaren Fahrerhauses an dem Fahrgestell eines Kraftfahrzeuges, insbesondere eines militärischen Fahrzeuges.
Bei Kraftfahrzeugen in Frontlenkerbauweise, bei denen der Motor unterhalb des Fahrerhauses angeordnet ist, kann das Fahrerhaus üblicherweise zu Wartungs- und/oder Reparaturzwecken nach Lösen hinterer Fahrerhauslager um vordere Lager nach vorne gekippt werden (GB1374698, DE 10 2010 023 428 A1, DE 10 2010 023 427 A1). Dabei sind die hinteren Fahrerhauslager in der normalen Fahrtstellung des Kraftfahrzeuges mittels Verriegelungsvorrichtungen gesichert.
Da es beispielsweise bei einer Kollision des Kraftfahrzeuges zu einer starken Beanspruchung der jeweiligen Verriegelungsvorrichtung kommen kann, müssen die Verriegelungsvorrichtungen derart aufgebaut sein, dass das Schloss der Verriegelungsvorrichtung auch in derartigen Fällen nicht außer Eingriff mit dem korrespondieren Schließbügel oder Schließbolzen kommt. Dieses gilt erst recht, wenn es sich bei dem Kraftfahrzeug um ein militärisches Fahrzeug handelt, bei dem auch im Falle einer Minenexplosion ein Öffnen der Verriegelungsvorrichtung sicher vermieden werden muss.
Insbesondere bei militärischen Fahrzeugen wird daher zusätzlich zu der jeweiligen Verriegelungsvorrichtung zur Sicherung der hinteren Fahrerhauslagerung ein Minenriegel vorgesehen. Dieser kann beispielsweise aus einer an dem Fahrgestell des Kraftfahrzeuges befestigten Bolzeneinrichtung mit einem Steckbolzen bestehen, der durch einen an dem Fahrerhaus befestigten Schließbügel gesteckt und in dieser Lage fixiert wird.

Der Erfindung liegt die Aufgabe zugrunde, eine Verriegelungsvorrichtung anzugeben, mit der eine zuverlässige Schließfunktion realisierbar ist. Insbesondere soll mit dieser Verriegelungsvorrichtung das kippbare Fahrerhaus an dem Fahrgestell eines militärischen Lastkraftwagens lösbar befestigbar sein, ohne dass zusätzliche Minenriegel erforderlich sind.

Diese Aufgabe wird erfindungsgemäß hinsichtlich der Verriegelungsvorrichtung durch die Merkmale des Anspruchs 1 und hinsichtlich der bevorzugten Verwendung der Verriegelungsvorrichtung durch die Merkmale des Anspruchs 8 gelöst. Weitere, besonders vorteilhafte Ausgestaltungen der Erfindung offenbaren die Unteransprüche.

Die Erfindung beruht im Wesentlichen auf dem Gedanken, als Verriegelungselement des Schlosses der Verriegelungsvorrichtung das gemeinsame Gelenk (Knie) eines zwei unterschiedlich lange, einarmige Hebelarmen aufweisenden Kniehebels zu verwenden, das in der geschlossenen Position der Verriegelungsvorrichtung in eine entsprechende Ausnehmung des Schließbolzens eingreift. Dabei sind der kurze Hebelarm des Kniehebels auf seinem dem Knie abgewandten Ende in einem Festlager und der lange Hebelarm des Kniehebels mit seinem dem Knie abgewandten Ende mit dem ersten Hebelarm eines um eine Schwenkachse schwenkbaren Umlenkhebels schwenkbar gelagert. Der zweite Hebelarm des Umlenkhebels ist mit einem Antrieb zum Verschwenken des Umlenkhebels verbunden, so dass eine Schwenkbewegung des Umlenkhebels eine Bewegung des Knies des Kniehebels in die Ausnehmung des Schließbolzens hinein oder aus dieser heraus bewirkt.

Durch entsprechende Wahl der Längen der Hebelarme des Kniehebels und der Hebelarme des Umlenkhebels sowie der Auslegung des Antriebes kann selbst bei militärischen Kraftfahrzeugen, die Minenexplosionen ausgesetzt sind, auf einen zusätzlichen Minenriegel verzichtet werden, d.h. die Verriegelungsvorrichtung übernimmt bei derartigen Kraftfahrzeugen gleichzeitig die Funktion des Minenriegels.

Vorzugsweise weist der Antrieb ein stangenförmiges Betätigungsglied auf, welches gelenkig mit dem zweiten Hebelarm des Umlenkhebels verbunden und zum Verschwenken des Umlenkhebels von einer Ruheposition in eine Betätigungsposition verschiebbar ist.

Dabei befindet sich in der Ruheposition des Betätigungsgliedes die Verriegelungsvorrichtung in ihrer verriegelten Position und wird in dieser Position durch eine auf den zweiten Hebelarm des Umlenkhebel wirkende federbeaufschlagte Sperrklinke gehalten, so dass ein ungewolltes Öffnen der Verriegelungsvorrichtung (etwa bei defektem Antrieb) verhindert wird.

Bei einem bevorzugten Ausführungsbeispiel der erfindungsgemäßen Verriegelungsvorrichtung wirkt die Sperrklinke auf das der Schwenkachse des Umlenkhebels abgewandte Ende des zweiten Hebelarmes, wobei ein zahnförmiger Vorsprung der Sperrklinke einen zahnförmigen Vorsprung des zweiten Hebelarmes hintergreift und dadurch ein Verschwenken des zweiten Hebelarmes verhindert.

Bei dem Antrieb kann es sich um einen hydraulischen, pneumatischen oder elektrischen Antrieb handeln.

Außerdem hat es sich als vorteilhaft erwiesen, wenn das Schloss mindestens einen ersten Sensor enthält, der die geschlossene Position der Verriegelungsvorrichtung überwacht. Dieses kann dadurch erfolgen, dass der erste Sensor derart an dem Schloss angeordnet ist, dass er ein entsprechendes elektrisches Signal erzeugt, wenn sich Schloss und Schließbolzen soweit genähert haben, dass das Knie des Kniehebels in die Ausnehmung des Schließbolzens eingreift.

Bei einem weiteren Ausführungsbeispiel hat es sich als vorteilhaft erwiesen, wenn das Schloss mindestens einen zweiten Sensor enthält, der den Zustand der Sperrklinke detektiert.

Weitere Einzelheiten und Vorteile der Erfindung ergeben sich aus den folgenden, anhand von Figuren erläuterten Ausführungsbeispielen. Es zeigen:
Fig. 1 den Schnitt durch ein Ausführungsbeispiel einer erfindungsgemäßen Verriegelungsvorrichtung mit Schloss und Schließbolzen in ihrer geöffneten Position und
Fig. 2 die in Fig. 1 dargestellte Verriegelungsvorrichtung in ihrer verriegelten Position.

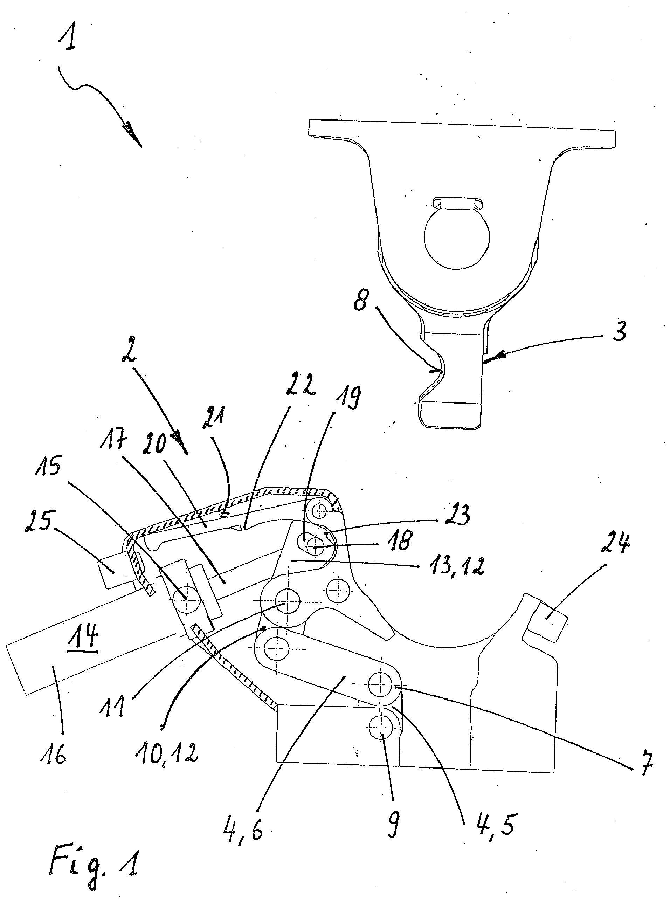

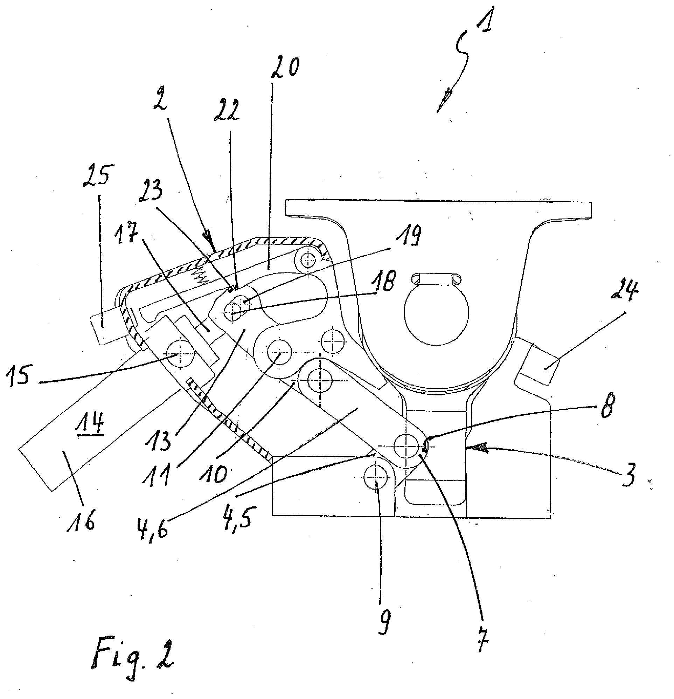

In den Fig. 1 und 2 ist mit 1 eine Verriegelungsvorrichtung bezeichnet, die ein Schloss 2 und einen mit dem Schloss 2 zusammenwirkenden Schließbolzen 3 umfasst. Dabei kann das Schloss 2 beispielsweise an dem Fahrgestell eines militärischen Kraftfahrzeuges und der Schließbolzen 3 an dem Fahrerhaus (als hintere Fahrerhauslagerung) des entsprechenden Kraftfahrzeuges befestigt sein.

Das Schloss 2 umfasst einen Kniehebel 4 mit zwei unterschiedlich langen, einarmigen Hebelarmen 5, 6, deren gemeinsames Gelenk (Knie) 7 in der verriegelten Position (Fig. 2) der Verriegelungsvorrichtung 1 in eine Ausnehmung 8 des Schließbolzens 3 eingreift und in der geöffneten Position (Fig. 1) der Verriegelungsvorrichtung 1 aus der Ausnehmung 8 des Schließbolzens 3 heraus bewegt ist.

Der kurze Hebelarm 5 des Kniehebels 4 ist auf seinem dem Knie 7 abgewandten Ende in einem Festlager 9 schwenkbar gelagert. Hingegen ist der lange Hebelarm 6 des Kniehebels 4 mit seinem dem Knie 7 abgewandten Ende in dem ersten Hebelarm 10 eines um eine Schwenkachse 11 schwenkbaren Umlenkhebels 12 schwenkbar gelagert.

Der zweite Hebelarm 13 des Umlenkhebels 12 ist mit einem hydraulischen Antrieb 14 zum Verschwenken des Umlenkhebels 12 von einer Ruheposition (Fig. 2) in eine Betätigungsposition (Fig. 1) verschiebbar verbunden. Hierzu umfasst der hydraulische Antrieb 14 einen um eine Drehachse 15 verschwenkbaren Hydraulikzylinder 16 und ein durch den Hydraulikzylinder 16 axial verschiebbares, stangenförmiges Betätigungsglied 17. Dieses Betätigungsglied 17 ist gelenkig mit dem zweiten Hebelarm 13 des Umlenkhebels 12 verbunden, wobei ein an dem Betätigungsglied 17 angeordneter senkrechter Zapfen 18 in ein Langloch 19 des zweiten Hebelarmes 13 eingreift.

In der Ruheposition des Betätigungsgliedes 17 befindet sich die Verriegelungsvorrichtung 1 in ihrer verriegelten Position (Fig. 2) und wird in dieser Position durch eine auf den zweiten Hebelarm 13 des Umlenkhebels 12 wirkende Sperrklinke 20 gehalten.

Hierzu wird die Sperrklinke 20 mit Hilfe einer Druckfeder 21 gegen das der Schwenkachse 11 des Umlenkhebels 12 abgewandte Ende des zweiten Hebelarmes 13 des Umlenkhebels 12 gedrückt. Dabei hintergreift ein zahnförmiger Vorsprung 22 der Sperrklinke 20 einen zahnförmigen Vorsprung 23 des zweiten Hebelarmes 13 und verhindert dadurch ein Verschwenken des zweiten Hebelarmes 13, wenn das stangenförmige Betätigungsglied 17 durch entsprechende Druckbeaufschlagung des Hydraulikzylinders 16 nicht verschoben wird.

Soll die Verriegelungsvorrichtung 1 von ihrer verriegelten Position (Fig. 2) in ihre geöffnete Position (Fig. 1) betätigt werden, so wird der Antrieb 14 durch eine entsprechende Einrichtung (nicht dargestellt) aktiviert.

Die Hydraulikflüssigkeit des Hydraulikzylinders 16 bewirkt dann eine Druckbeaufschlagung des stangenförmigen Betätigungsgliedes 17, sodass der Zapfen 18 den zahnförmigen Vorsprung 22 durch seine runde Formgebung nach oben entgegen der Druckfeder 21 drückt. Entsprechend sind die beiden zahnförmigen Vorsprünge 22 und 23 nicht mehr im Formschluss, d.h., außer Eingriff. Der zweite Hebelarm 13 kann ungehindert um die Schwenkachse 11 im Uhrzeigersinn bewegt werden, wodurch das Knie 7 über den Kniehebel 4 aus der Ausnehmung 8 des Schließbolzens 3 herausgezogen wird.

Wie den Fig. 1 und 2 entnehmbar ist, enthält das Schloss 2 einen ersten Sensor 24, der die geschlossene Position des Schlosses 2 überwacht und hierzu derart an dem Schloss 2 angeordnet ist, dass er ein entsprechendes elektrisches Signal erzeugt, wenn sich Schloss 2 und Schließbolzen 3 soweit genähert haben, dass das Knie 7 des Kniehebels 4 in die Ausnehmung 8 des Schließbolzens 3 eingreift.

Außerdem enthält das Schloss 2 einen zweiten Sensor 25, der den Zustand der Sperrklinke 20 detektiert.

### Bezugszeichenliste

- 1: Verriegelungsvorrichtung
- 2: Schloss
- 3: Schließbolzen
- 4: Kniehebel
- 5: (kurzer) Hebelarm
- 6: (langer) Hebelarm
- 7: Gelenk, Knie
- 8: Ausnehmung
- 9: Festlager
- 10: erster Hebelarm
- 11: Schwenkachse
- 12: Umlenkhebel
- 13: zweiter Hebelarm
- 14: Antrieb
- 15: Drehachse
- 16: Hydraulikzylinder
- 17: Betätigungsglied
- 18: Zapfen
- 19: Langloch
- 20: Sperrklinke
- 21: Druckfeder
- 22: zahnförmiger Vorsprung (Sperrklinke)
- 23: zahnförmiger Vorsprung (zweiter Hebelarm)
- 24: erster Sensor
- 25: zweiter Sensor

## Patentansprüche

1. Verriegelungsvorrichtung mit einem Schloss (2) und einem mit dem Schloss (2) verbindbaren Schließbolzen (3), mit den Merkmalen:
a) das Schloss (2) umfasst einen Kniehebel (4) mit zwei unterschiedlich langen, einarmigen Hebelarmen (5, 6), deren gemeinsames Gelenk (Knie) (7) in der verriegelten Position der Verriegelungsvorrichtung (1) in eine Ausnehmung (8) des Schließbolzens (3) eingreift und in der geöffneten Position der Verriegelungsvorrichtung (1) aus der Ausnehmung (8) des Schließbolzens (3) heraus bewegt ist;
b) der kurze Hebelarm (5) des Kniehebels (4) ist auf seinem dem Knie (7) abgewandten Ende in einem Festlager (9) schwenkbar gelagert;
c) der lange Hebelarm (6) des Kniehebels (4) ist mit seinem dem Knie (7) abgewandten Ende mit dem ersten Hebelarm (10) eines um eine Schwenkachse (11) schwenkbaren Umlenkhebels (12) schwenkbar gelagert;
d) der zweite Hebelarm (13) des Umlenkhebels (12) ist mit einem Antrieb (14) zum Verschwenken des Umienkhebels (12) verbunden, so dass eine Schwenkbewegung des Umlenkhebels (12) eine Bewegung des Knies (7) des Kniehebels (4) in die Ausnehmung (8) des Schließbolzens (3) hinein oder aus dieser heraus erfolgt.

2. Verriegelungsvorrichtung nach Anspruch 1, **dadurch gekennzeichnet, dass** der Antrieb (14) ein stangenförmiges Betätigungsglied (17) aufweist, welches gelenkig mit dem zweiten Hebelarm (13) des Umlenkhebels (12) verbunden und zum Verschwenken des Umlenkhebels (12) von einer Ruheposition in eine Betätigungsposition verschiebbar ist, wobei sich in der Ruheposition des Betätigungsgliedes (17) die Verriegelungsvorrichtung (1) in ihrer verriegelten Position befindet, und in dieser Position durch eine auf den zweiten Hebelarm (13) des Umlenkhebels (12) wirkende federbeaufschlagte Sperrklinke (20) gehalten wird.

3. Verriegelungsvorrichtung nach Anspruch 2, **dadurch gekennzeichnet, dass** die Sperrklinke (20) auf das der Schwenkachse (11) des Umlenkhebels (12) abgewandte Ende des zweiten Hebelarmes (13) wirkt, wobei ein zahnförmiger Vorsprung (22) der Sperrklinke (20) einen zahnförmigen Vorsprung (23) des zweiten Hebelarmes (13) hintergreift und ein Verschwenken des zweiten Hebelarmes (13) verhindert.

4. Verriegelungsvorrichtung nach einem der Ansprüche 1 bis 3, **dadurch gekennzeichnet, dass** es sich bei dem Antrieb (14) um einen hydraulischen, pneumatischen oder elektrischen Antrieb handelt

5. Verriegelungsvorrichtung nach einem der Ansprüche 1 bis 4, **dadurch gekennzeichnet, dass** das Schloss (2) mindestens einen ersten Sensor (24) enthält, der die geschlossene Position der Verriegelungsvorrichtung (1) überwacht.

6. Verriegelungsvorrichtung nach Anspruch 5, **dadurch gekennzeichnet, dass** der erste Sensor (24) derart an dem Schloss (2) angeordnet ist, dass er ein entsprechendes elektrisches Signal erzeugt, wenn sich Schloss (2) und Schließbolzen (3) soweit genähert haben, dass das Knie (7) des Kniehebels (4) in die Ausnehmung (8) des Schließbolzens (3) eingreift.

7. Verriegelungsvorrichtung nach einem der Ansprüche 2 bis 6, **dadurch gekennzeichnet, dass** das Schloss (2) mindestens einen zweiten Sensor (25) enthält, der den Zustand der Sperrklinke (20) detektiert.

8. Verwendung der Verriegelungsvorrichtung (1) nach einem der Ansprüche 1 bis 7 zur lösbaren Fixierung eines kippbaren Fahrerhauses an dem Fahrgestell eines Nutzfahrzeuges, insbesondere eines militärischen Fahrzeuges.

## Claims

1. Locking device comprising a lock (2) and locking bolt (3) that is connectable to the lock (2), comprising the features:
a) the lock (2) comprises a knee lever (4) with two one-arm lever arms (5, 6) having different length and whose common joint (knee) (7), in the locking position of the locking device (1), engages into a recess (8) of the locking bolt (3), and, in the open position of the locking device (1), is disengaged from the recess (8) of the locking bolt (3);
b) the short lever (5) of the knee lever (4) is swivel-mounted in a fixed bearing at its end opposite of the knee (7);
c) the long lever (6) of the knee lever (4) is swivel-mounted to the first lever (10) of a reversing lever (12), which is swivelling about a swivel-axis (11), at its end opposite of the knee (7);
d) the second lever (13) of the reversing lever (12) is connected to a drive (14) for swivelling the reversing lever (12), such that a swivelling movement of the reversing lever (12) causes a movement of the knee (7) of the knee lever (4) into the recess (8) of the locking bolt (3) or out of it.

2. A locking device according to claim 1, **characterized in that** the drive (14) comprises a rod-like actuating member (17), which is jointly connected to the second lever (13) of the inverting lever (12) and which is moveable from a resting position to an actuating position for swivelling of the inverting lever (12), wherein, when the actuating member (17) is in its resting position, the locking device (1) is in its locked position and is kept in this position by a spring loaded retaining pawl (20) acting on the second lever (13) of the reversing lever (12).

3. A locking device according to claim 2, **characterized in that** the retaining pawl (20) acts on the end of the second lever (13) which is opposite of the swivelling axis (11) of the inverting lever (12), wherein a tooth-like protrusion (22) of the retaining pawl (20) engages a tooth-like protrusion (23) of the second lever (13), thereby blocking swivelling of the second lever (13).

4. A locking device according to any one of claims 1 to 3, **characterized in that** the drive (14) is a hydraulic, pneumatic or electric drive.

5. A locking device according to any one of claims 1 to 4, **characterized in that** the lock (2) comprises at least a first sensor (24), which monitors the locked position of the locking device (1).

6. A locking device according to claim 5, **characterized in that** the first sensor (24) is arranged at the lock (2) such that it generates a corresponding electric signal, when the lock (2) and the locking bolt (3) approached each other such that the knee (7) of the knee lever (4) engages into the recess (8) of the locking bolt (3).

7. A locking device according to any one of claims 2 to 6, **characterized in that** the lock (2) comprises at least a second sensor (25), which detects the state of the retaining pawl (20).

8. Use of the locking device (1) according to any one of claims 1 to 7 for detachably fixing a tiltable driver cabin to a vehicle chassis of a utility vehicle, in particular a military vehicle.

## Revendications

1. Dispositif de verrouillage comprenant une serrure (2) et un pêne (3) pouvant être relié à la serrure (2), qui présente les caractéristiques :
a) la serrure (2) comprend une genouillère (4) avec deux bras de levier (5, 6) ayant un bras de longueur différente, dont l'articulation commune (le coude) (7) vient s'engager dans un évidement (8) du pêne (3) dans la position verrouillée du dispositif de verrouillage (1), et, dans la position ouverte du dispositif de verrouillage (1), est déplacée en dehors de l'évidement (8) du pêne (3) ;
b) le bras de levier court (5) de la genouillère (4) est, sur son extrémité opposée au coude (7), monté pivotant dans un palier fixe (9) ;
c) le bras de levier long (6) de la genouillère (4) est, avec son extrémité opposée au coude (7), monté pivotant avec le premier bras de levier (10) d'un levier de déviation (12) pivotant autour d'un axe de pivotement (11) ;
d) le second bras de levier (13) du levier de déviation (12) est relié à un entraînement (14) pour basculer le levier de déviation (12) de telle sorte qu'un mouvement de pivotement du levier de déviation (12) entraîne un mouvement du coude (7) de la genouillère (4) dans l'évidement (8) du pêne (3) ou en dehors de celui-ci.

2. Dispositif de verrouillage selon la revendication 1, **caractérisé en ce que** l'entraînement (14) présente un organe d'actionnement en forme de tige (17) qui est relié de manière articulée au second bras de levier (13) du levier de déviation (12) et peut être déplacé pour basculer le levier de déviation (12) d'une position de repos dans une position d'actionnement, dans lequel, dans la position repos de l'organe d'actionnement (17), le dispositif de verrouillage (1) se trouve dans sa position verrouillée et est maintenu dans cette position par un cliquet d'arrêt (20) sollicité par un ressort et agissant sur le second bras de levier (13) du levier de déviation (12).

3. Dispositif de verrouillage selon la revendication 2, **caractérisé en ce que** le cliquet d'arrêt (20) agit sur l'extrémité du second bras de levier (13) opposée à l'axe de pivotement (11) du levier de déviation (12), une saillie (22) du cliquet d'arrêt (20) en forme de dent s'engageant derrière une saillie (23) du second bras de levier (13) en forme de dent et empêchant le pivotement du second bras de levier (13).

4. Dispositif de verrouillage selon une des revendications 1 à 3, **caractérisé en ce que** l'entraînement (14) est un entraînement hydraulique, pneumatique ou électrique.

5. Dispositif de verrouillage selon une des revendications 1 à 4, **caractérisé en ce que** la serrure (2) comprend au moins un premier capteur (24) qui surveille la position fermée du dispositif de verrouillage (1).

6. Dispositif de verrouillage selon la revendication 5, **caractérisé en ce que** premier capteur (24) est disposé sur la serrure (2) de telle sorte qu'il génère un signal électrique correspondant lorsque la serrure (2) et le pêne (3) se sont rapprochés de telle sorte que le coude (7) de la genouillère (4) s'engage dans l'évidement (8) du pêne (3).

7. Dispositif de verrouillage selon une des revendications 2 à 6, **caractérisé en ce que** la serrure (2) contient au moins un deuxième capteur (25) qui détecte l'état du cliquet d'arrêt (20).

8. Utilisation du dispositif de verrouillage (1) selon une des revendications 1 à 7 pour fixer de manière détachable une cabine basculante sur le châssis d'un véhicule utilitaire, en particulier d'un véhicule militaire.
